# EUROPÄISCHE PATENTSCHRIFT

(11) **EP 2 529 127 B1**
(45) Veröffentlichungstag und Bekanntmachung des Hinweises auf die Patenterteilung: **11.03.2015**
(21) Anmeldenummer: 10782234.8
(22) Anmeldetag: 15.11.2010
(51) Int. Cl.: F16D 23/14

(54) **AUSRÜCKEINRICHTUNG FÜR KRAFTFAHRZEUGKUPPLUNGEN**
DISENGAGING UNIT FOR MOTOR VEHICLE CLUTCHES
DISPOSITIF DE DÉSACCOUPLEMENT POUR DES EMBRAYAGES DE VÉHICULES

(30) Priorität: 25.01.2010 DE 102010005610
(43) Veröffentlichungstag der Anmeldung: 05.12.2012
(73) Patentinhaber: Schaeffler Technologies AG & Co. KG, 91074 Herzogenaurach (DE)
(72) Erfinder: AMARO, Milton, 18070-295 Sorocaba (BR); DOS SANTOS GIORIA, Gustavo, 18081-040 Sorocaba (BR); DOMINGUES, Everton, 18071-007 Sorocaba (BR)
(86) Internationale Anmeldenummer: PCT/EP2010/067473
(87) Internationale Veröffentlichungsnummer: WO 2011/088913

(56) Entgegenhaltungen:
- DE-A1- 2 457 353
- DE-U- 7 325 080
- FR-A1- 2 350 505
- FR-A1- 2 355 204
- FR-A1- 2 693 523
- US-A1- 2002 134 641

## Beschreibung

### Gebiet der Erfindung

Die Erfindung betrifft eine Ausrückeinrichtung mit einem durch Zugkraft betätigten Schrägkugellager, umfassend einen inneren Lagerring und einen äußeren Lagerring sowie zwischen den Lagerringen geführte Wälzkörper, wobei das Schrägkugellager radial beweglich in einem das Schrägkugellager außen umgebenden drehfesten äußeren Bauteil axial abgestützt ist.

### Hintergrund der Erfindung

Eine Ausrückeinrichtung mit einem Schrägkugellager der vorstehend genannten Art ist beispielsweise aus der DE09310136U1 oder aus der FR2693523 bekannt, in der Aufbau und Wirkungsweise gezogener Ausrückeinrichtung beschrieben sind.

Der äußere Lagerring ist an einem in diesem Fall als Muffe bezeichneten und den äußeren Lagerring außen umgebenden drehfesten äußeren Bauteil axial abgestützt. Außerdem ist der äußere Lagerring in der Muffe relativ zu der Muffe begrenzt radial verschiebbar an Federzungen abgestützt. Die Muffe ist relativ zum Fahrzeuggetriebe fest und radial auf der Getriebewelle zentriert. Das Kupplungsausrücklager ist über den Innenring an der Rotationsachse der Kupplung zentriert. Die elastische Zungen am äußeren Bauteil nehmen den äußeren Lagerring radial zwischen sich, so dass dieser im Falle von parallelem Achsversatz der Rotationsachsen der Kupplung zu der des Getriebes federbelastet radial ausweichen kann. Die Lebensdauer dieser Ausrückeinrichtung ist maßgeblich von der Qualität der Federzungen abhängig.

Ein Ausgleich des Winkelversatzes zwischen Rotationsachse des Getriebes und Rotationsachse der Kupplung ist mit dieser Anordnung beispielsweise nicht möglich. Winkelversatz heißt, dass die Rotationsachsen der Kupplung und Rotationsachse des Getriebes und/oder der Ausrückvorrichtung nicht mehr parallel zueinander ausgerichtet sind.

Der vorliegenden Erfindung liegt die Aufgabe zu Grunde, eine Ausrückeinrichtung mit einem als Schrägkugellager ausgebildeten Wälzlager zu schaffen, in dem möglicher paralleler Achsversatz radial und/oder mögliche Verkippungen ausgeglichen werden.

### Beschreibung der Erfindung

Die Aufgabe ist nach dem Gegenstand des Anspruchs 1 und abhängiger Ansprüche gelöst.

Die erfindungsgemäße Ausrückeinrichtung umfasst ein Schrägkugellager mit einem inneren Lagerring und einem äußeren Lagerring sowie zwischen den Lagerringen geführten Wälzkörpern.

Das Ausrücklager ist ein gezogenes Ausrücklager. Ein gezogenes Ausrücklager ist dazu bestimmt, auf Zug hin axial verlagert zu werden und dabei die Kupplung auszurücken. Erfindungsgemäß ist vorgesehen, dass der innere Lagerring an einem außen liegenden, drehfest gelagerten Bauteil und der äußere Lagerring an einem innen liegenden drehbaren Bauteil jeweils abgestützt ist.

Das gehäuseartig ausgebildete äußere Bauteil umgibt zumindest den inneren Lagerring, vorzugsweise den inneren Lagerring, den äußeren Lagerring und das innere Bauteil. Das äußere Bauteil wird von der Fachwelt auch als Muffe oder Gehäuse und somit nachfolgend auch als Gehäuse bezeichnet und kann in den verschiedensten Ausführungen vorliegen.

An dem Gehäuse greift eine Betätigungseinrichtung zumindest zeitweise axial so mit Zugkräften an, dass das Gehäuse zum Ausrücken der Kupplung axial verlagert wird und dabei den inneren Lagerring axial mitnimmt. Die axiale Bewegung wird über die Wälzkörper auf den äußeren Lagerring weitergeben, der axial mit dem inneren Bauteil verbunden ist. Letzteres führt dazu, dass das innere Bauteil axial von dem äußeren Lagerring mitgenommen wird. Da das innere Bauteil an die Kupplung angebunden ist, wird die Kupplung aufgrund der Zugkräfte ausgerückt. Das innere Bauteil ist in der Regel rotationssymmetrisch rohr- oder hülsenförmig ausgebildet und verbindet das Schrägkugellager mit der Kupplung, beispielsweise mit den Enden einer Tellerfeder der Kupplung.

Erfindungsgemäß ist der innere Lagerring mit dem Gehäuse drehfest verbunden und dabei aber in dem äußeren Bauteil begrenzt radial verschiebbar zur Rotationsachse der Ausrückeinrichtung bzw. des Getriebes in dem Gehäuse aufgenommen und außerdem zumindest in eine Axialrichtung abgestützt. Der innere Lagerring ist dabei mit einem radialen Bewegungsspiel zum Gehäuse angeordnet, innerhalb dessen er beweglich ist und das mindestens einem maximal möglichen Achsversatz zwischen den Rotationsachsen entspricht,

Der mit dem inneren Bauteil der Kupplung rotierende äußere Lagerring ist an dem inneren Bauteil radial geführt und axial zumindest in eine Richtung fest. Das innere Bauteil ist relativ zur Kupplung im wesentlichen radial starr, z.B. mit einem Presssitz, geführt.

Paralleler Achsversatz beispielsweise zwischen der Rotationsachse der Kupplung zur Rotationsachse des Getriebes würde im ungünstigen Fall zu Schlag und Zwangsbewegungen an der Kupplung oder in der Ausrückeinrichtung führen. Das könnte es zu Relativbewegungen des inneren Bauteils zu den Enden der Kupplungsfeder und damit zu erhöhtem Verschleiß führen. Da der innere Lagerring jedoch radial zumindest um ein Spiel zum Gehäuse beweglich ist, führt dies zu einem radialem Ausweichen des inneren Lagerringes um den Betrag des Achsversatzes. Der innere Lagerring zentriert sich beim Zusammenbau der Kupplung beispielsweise an der Rotationsachse der Kupplung und verschiebt sich radial gegenüber der Rotationsachse der Getriebewelle, so dass der Achsversatzes in der Ausrückeinheit zwischen dem Ausrücklager und dem Gehäuse ausgeglichen ist.

Der innere Lagerring ist beispielsweise in einer nutförmigen Führungsbahn des äußeren Bauteils axial gehalten aber radial beweglich geführt. Eine Ausgestaltung der Erfindung sieht vor, dass in dem Gehäuse ein Haltering beispielsweise in Form einer Lochscheibe angeordnet ist. Diese Anordnung macht es möglich die Struktur des Gehäuses einfacher zu gestalten. Außerdem können zwecks einfacher Herstellung für das Gehäuse Werkstoffe wie Leichtmetalle oder Kunststoffe eingesetzt werden, während die Scheibe beispielsweise aus gehärtetem und/oder beschichteten Stahlblech den Anforderungen entsprechend verschleißfest hergestellt ist.

An einem Absatz des Gehäuses oder an einer axialen Stirnseite des Halterrings/der Lochscheibe ist eine sich radial erstreckende, vorzugsweise kreisringförmige Führungsfläche ausgebildet. An dieser Führungsfläche liegt der innere Lagerring axial an und ist in radiale Richtung an der Führungsfläche gleitend radial beweglich. Dazu weist der innere Lagerring vorzugsweise einen radialen Führungsflansch mit einer planen Führungsfläche auf. Die plane Führungsfläche ist axiale Stützfläche des inneren Lagerrings an der Haltescheibe und Gleitfläche bei radialem Ausgleich.

Eine Ausgestaltung der Erfindung sieht vor, dass der innere Lagerring axial zwischen dem Haltering und einem Haltemittel gehalten ist. Das Haltemittel folgt axial beispielsweise auf den Führungsflansch an einer von der Führungsfläche des Halterrings abgewandten Seite und ist z.B. ein Sicherungsring oder vorzugsweise eine Feder, wie eine Tellerfeder oder eine Wellfeder. Die Feder stützt sich an einem Absatz oder in einer Nut des äußeren Bauteils ab und ist gegen den Führungsflansch vorgespannt, so dass der Innenring zwar radial mit dem Bewegungsspiel aber axial spielfrei an dem äußeren Bauteil geführt ist.

Die Erfindung sieht mit einem weiteren unabhängigen Anspruch und mit abhängigen Anspruch eine Ausrückeinrichtung vor, in die eine Vorrichtung zum Ausgleich zum Winkelversatz der Rotationsachsen integriert ist. In dieser Ausrückeinrichtung ist einem der Lagerringe entweder eine konvex ausgebildete Anlagefläche oder eine konkav ausgebildete Anlagefläche zugeordnet, welche mit einer konkav oder konvex ausgebildeten Anlagefläche an einem anderen Bauteil korrespondiert. Die konkav ausgebildete Anlagefläche ist axial fest dem inneren Bauteil zugeordnet und die konvex ausgebildete Anlagefläche einem Zwischenring zwischen dem äußern Bauteil und dem inneren Lagerring. Die Anlageflächen sind gegeneinander axial vorgespannt und gegeneinander verschwenkbar. Unter konkav und konvex ist bevorzugt ballig und hierbei vorzugsweise kugelballig zu verstehen.

Eine erste Ausgestaltung der zuvor beschriebenen Erfindung sieht vor, dass dem äußeren Lagerring eine konvex ausgebildete Anlagefläche zugeordnet ist, welche mit einer konkav ausgebildeten Anlagefläche korrespondiert, wobei die konkav ausgebildete Anlagefläche axial fest dem inneren Bauteil zugeordnet ist, und wobei die Anlageflächen gegeneinander axial vorgespannt und gegeneinander verschwenkbar sind. Unter konkav und konvex ist bevorzugt ballig und hierbei vorzugsweise kugelballig zu verstehen.

Eine zweite Ausgestaltung der Erfindung sieht zum Ausgleich von Winkelversatz der Rotationsachsen vor, dass der innere Lagerring über einen Stützring an dem äußeren Bauteil axial abgestützt ist, wobei der Stützring radial beweglich zu dem Gehäuse angeordnet ist. Dem Zwischenring ist eine konvex ausgebildete Anlagefläche zugeordnet, welche mit einer konkav ausgebildeten Anlagefläche korrespondiert, wobei die konkav ausgebildete Anlagefläche dem inneren Lagerring axial fest zugeordnet ist, und wobei die Anlageflächen gegeneinander axial vorgespannt und gegeneinander verschwenkbar sind.

Der Begriff "zugeordnet", steht dafür, dass die Anlagefläche entweder direkt an dem betreffenden Bauteil wie dem äußern Lagering oder Sützring ausgebildet oder an diesen angeordnet ist, bzw. beispielsweise an einem Zwischenbauteil ausgebildet, welches durch Form- oder Kraftschluss mit dem betreffenden Bauteil verbunden ist.

Die vorgenannten konvexen und konkaven Anlageflächen der ersten und zweiten Ausgestaltung der Erfindung mit Ausgleich von Winkelversatz korrespondieren so, dass die axial hervorstehend konvex - ballige Anlagefläche in die konkave Vertiefung axial eingreift und an der konkav - balligen Anlagefläche anliegt, dass beide Anlageflächen in Form einer Kalottenanordnung eines Kugelgelenks axial zumindest partiell linienförmig oder flächenförmig aneinander liegen. Denkbar sind auch konkave oder konvexe Konturen, die andere gegeneinander verschwenkbare linienförmige oder punktförmige Kontakte zulassen. Der Mittelpunkt des Radius der Balligkeit bzw. der Schwenkpunkt um den geschwenkt wird, liegt dazu auf der Rotationsachse, zu dem die jeweilige Anlagefläche zentriert ist.

Die konvex ausgebildete Anlagefläche der ersten Ausgestaltung der Erfindung mit Ausgleich von Winkelversatz der Rotationsachsen ist entweder direkt an einem rotationssymmetrischen Bereich des äußeren Lagerrings, an einem Flansch von des äußeren Lagerrings oder an einer Zwischenlage ausgebildet, wobei die Zwischenlage beispielsweise radial an dem äußeren Lagerring oder Stützring geführt und axial an diesem abgestützt ist. Die konkave ausgebildete Anlagefläche ist im zuvor genannten Fall entweder direkt an dem inneren Bauteil ausgebildet oder an einem weiteren Stützring, wobei letzterer am zumeist hülsenförmig ausgebildeten inneren Bauteil befestigt ist.

Bei beiden zuvor beschriebenen Ausgestaltungen der Erfindung sind die Anlageflächen an Bauteilen, Auflagen oder Zwischenlagen aus Kunststoff oder Stahl ausgebildet und wahlweise gleitbeschichtet. Die Lagerringe sind als Blechumformteile, insbesondere kalt geformt ausgeführt.

Die Erfindung ermöglicht in Fahrzeugen mit Doppelkupplungsgetrieben oder anderen Anordnungen, in denen gezogene Ausrücklager eingesetzt sind, den Ausgleich von radialem und axialem Versatz. Aufgrund der Zuordnung des inneren Lagerringes zum äußeren Gehäuse und des äußeren Lagerringes zum inneren Gehäuse und weil die Schnittstellen zum Ausgleich außerhalb des eigentlichen Schrägkugellagers aber innerhalb der Ausrückeinrichtung angeordnet sind, ist die Ausrückeinheit platzsparend und mit einfachen Mitteln kostengünstig realisierbar.

### Kurze Beschreibung der Zeichnungen

Bevorzugte Ausführungsformen der Erfindung werden nachfolgend anhand der Zeichnungen näher erläutert. Diese zeigen:
- Figur 1: eine Ausführungsform einer erfindungsgemäßen Ausrückeinrichtung in einem Längsschnitt entlang der Rotationsachse,
- Figur 2 und 2a: die Ausrückeinrichtung gemäß Figur 1 zur vereinfachten Beschreibung des Axialversatzes der Rotationsachsen und zum Ausgleich, wobei Figur 2a das nicht maßstäblich aber vergrößert dargestellte Detail Z aus Figur 2 abbildet,
- Figur 3: die Ausrückeinrichtung gemäß Figur 1 zur vereinfachten Beschreibung des Winkelversatzes der Rotationsachsen und zur Winkeleinstellbarkeit der Ausrückeinrichtung,
- Figur 4: eine Abwandlung der Ausführungsform der Ausrückeinheit nach Figur 1 in einem Längsschnitt entlang der Rotationsachsen
- Figur 5: eine weitere Ausführungsform einer erfindungsgemäßen Ausrückeinrichtung in einem Längsschnitt entlang der Rotationsachse.

### Ausführliche Beschreibung der Zeichnungen

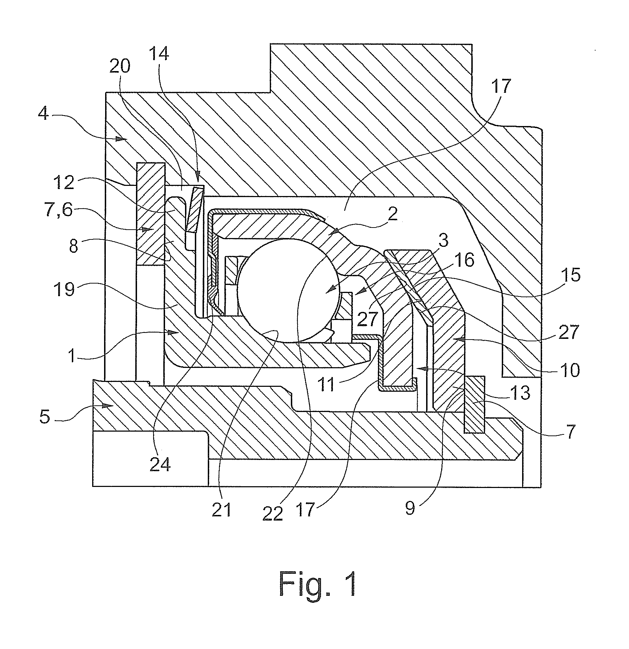

Der in Figur 1 dargestellten Ausführungsform einer Ausrückeinrichtung ist ein als Schrägkugellager aus einem inneren Lagerring 1, einem äußeren Lagerring 2 und aus Wälzkörpern 3 in einem äußeren Bauteil 4 aufgenommen. Das äußere Bauteil 4 in Form eines Gehäuses umgibt das Schrägkugellager umfangsseitig und ist relativ zu einem nicht dargestellten Getriebe drehfest gelagert.

Der innere Lagerring 1 weist einen radialen Flansch 19 auf, der durch die axialen Federkräfte eines Federelements 14 axial zwischen dem Federelement 14 und einem Haltering 6 eingeklemmt ist. Der Haltering 6 ist lochscheibenförmig ausgebildet und greift in eine Nut 20 des äußeren Bauteils 4 und ist in dieser somit axial an dem äußeren Bauteil 4 abgestützt. Das Federelement 14 ist ebenfalls axial in dem äußeren Bauteil 4 abgestützt, so dass der innere Lagerring 1 axial in die eine Richtung über den Haltering 6 und in die andere Richtung über das Federelement 14 axial an dem Gehäuse abgestützt ist. Darüber hinaus sitzt der innere Lagerring 1 drehfest in dem Gehäuse.

Der äußere Lagerring 2 ist mit einem Radialflansch 13 über einen Stützring 10 an einem innen liegenden mit einer nicht dargestellten Kupplung drehenden hülsenförmigen inneren Bauteil 5 drehfest und axial abgestützt.

An beiden Lagerringen 1 und 2 sind Laufbahnen 21 und 22 für Wälzkörper 3 ausgebildet. Durch den Wälzkontakt der Wälzkörper 3, die sich an den Laufbahnen abstützen, mit den Laufbahnen sind die rotierenden Relativbewegungen des äußeren Lageringes 2 gegenüber dem inneren Lagerring 1 und damit gegenüber dem äußeren Bauteil möglich. Die Wälzkörper 3 in Form von Kugeln sind zudem in einem Käfig 16 geführt. Dichtungen 17 und 24 dichten den zwischen den beiden Lagerringen 1 und 2 verbleibenden Spalt.

An dem äußeren Bauteil 4 greift ein nicht dargestellter Betätigungsorgan an, so dass das Ausrücklager durch Ziehen axial zum Ausrücken der Kupplung betätigt werden kann. Dieses Ausrückorgan ist beispielsweise ein gabelförmiger Hebel. Das linear bewegte Gehäuse nimmt dabei den in ihm verankerten Haltering 6 mit, der seinerseits mit einer Stützfläche 8 flach an dem radialen Flansch 19 des inneren Lagerrings 1 axial anliegt. Die Betätigungskräfte werden von dem stehenden inneren Lagerring 1 auf den äußeren Lagerring 2 übertragen, der das innere Bauteil 5 axial mitnimmt und die Kupplung ausrückt.

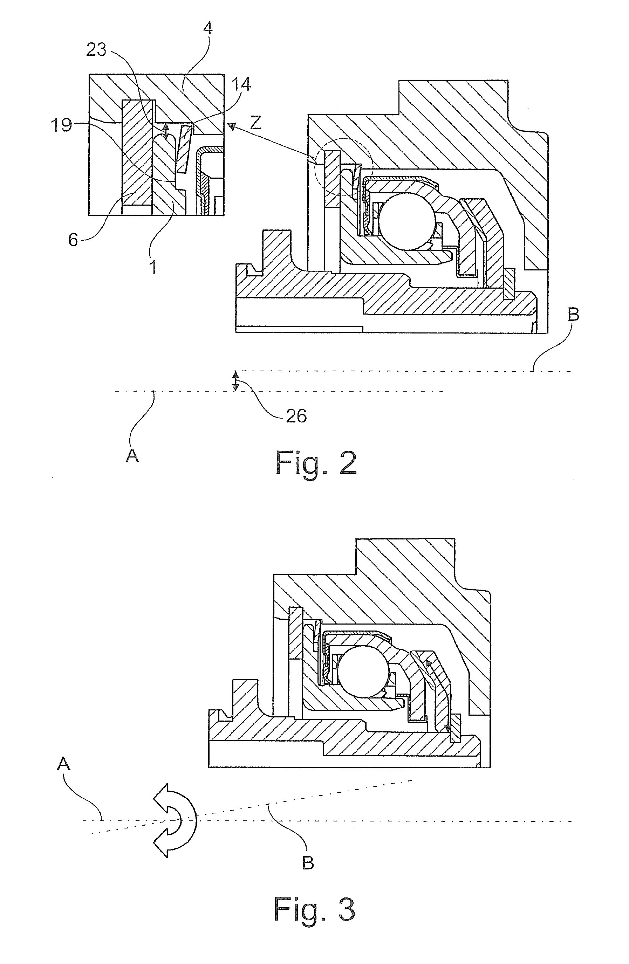

Der radiale Flansch 19 ist in radiale Richtungen beweglich zwischen dem Federelement 14 und der Haltering 6 angeordnet. Dies ist in Figur 2a mit dem Doppelpfeil symbolisiert. Wie aus Figur 2 ersichtlich ist, ist hierzu ein Radialspalt 23 (radiales Bewegungsspiel) zwischen dem radial außen liegenden Rand 12 des Flanschs 19 und dem außen liegenden Bauteil 4 ausgesehen. Diese radiale Spiel ist, wenn der Flansch 19 und damit die Rotationsachse A des Innenrings zur Rotationsachse B des äußeren Bauteils 4 bzw. eines nicht dargestellten Getriebes zentriert ist, in alle radialen Richtungen gleich groß. Der Radialspalt 23 ist in diesem Fall mindestens genauso groß bemessen, wie ein möglicher Achsversatz 26 der Achsen A und B maximal groß sein kann.

Der innere Lagerring 1 ist über die Wälzkörper 3 auch an der Laufbahn 22 des äußeren Lagerrings 2 zentriert, der wiederum zur Rotationsachse A der Kupplung. Im Falle von Achsversatz 26 wird sich demnach der innere Lagerring 1 zur Rotationsachse A ausrichten, in dem der Flansch 19 an der Stützfläche 8 zwischen Halterring 6 und Federelement 14 ausweicht. Zur Verbindung des äußeren Lagerrings 2 mit dem innen liegenden drehbaren Bauteil 5 ist ein Sicherungsring oder ein ähnlich ausgebildetes mit dem inneren Bauteil 5 verankertes Halteelement 7 vorgesehen, das als Halterring ausgelegt ist aber auch eine Schulter sein kann und das auch eine sich radial erstreckende Stützfläche 9 aufweist, an der der ein ansonsten mit Presssitz auf dem inneren Bauteil 5 sitzender Stützring 10 axial gesichert ist. An dieser Stützfläche 9 liegt der äußere Lagerring 2 mittelbar über den dazwischen liegenden Stützring 10 an. Der Stützring 10 weist eine umlaufend konkav verlaufende, vorzugsweise ballig - konkav, ausgebildete Anlagefläche 11 auf, die mit einer korrespondierend am äußeren Lagerring 2 ausgebildeten konvexen, vorzugsweise ballig konvexen Anlagefläche 27 über eine Auflage oder Zwischenlage 15 so korrespondiert, dass eine Kippbewegung des Schrägkugellagers gegenüber dem inneren Bauteil 5 zwecks Ausgleich von Winkelfehlern möglich ist. In Figur 3 ist ein entsprechender Winkelversatz zwischen den Rotationsachsen A und B dargestellt und der schwenkbare Ausgleich in der Ausrückeinheit mit dem Doppelschwenkpfeil symbolisiert. Das Schrägkugellager kann eine der der Schrägstellung der Achse B ausgleichende Schrägstellung einnehmen.

Die Auflage 15 aus mindestens einem Gleitmaterial gebildet und kann alternativ auch als Gleitbeschichtung unmittelbar auf die Anlageflächen 11 und/oder 27 aufgebracht sein. Das Gleitmaterial mindert die Reibung und verringert die Einstellkräfte sowie den Verschleiß.

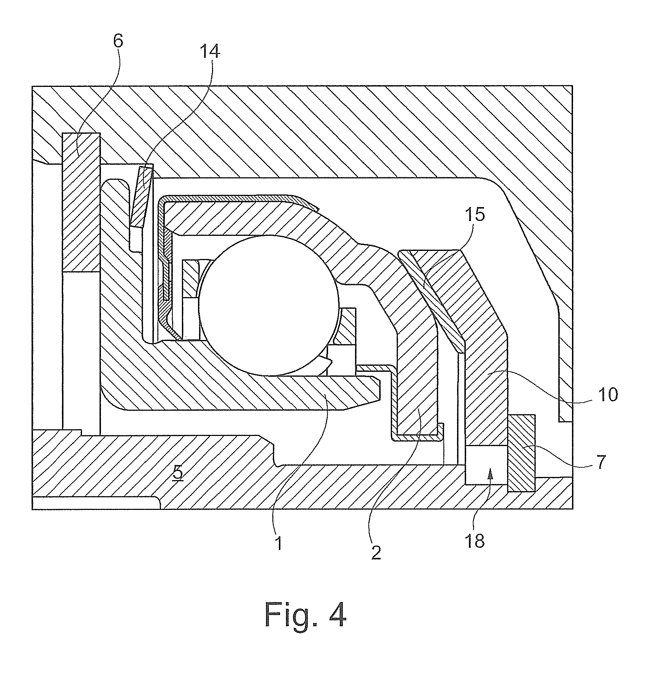

Figur 4 zeigt eine die in Figur 1 dargestellten Ausführungsform der erfindungsgemäßen Ausrückeinrichtung. Im Unterschied zur Ausführungsform der Figur 1 ist der Stützring 10 zusätzlich zu dem Presssitz auch noch mit einem Stift 18 in Umfangsrichtung drehfest auf dem inneren Bauteil formschlüssig gesichert.

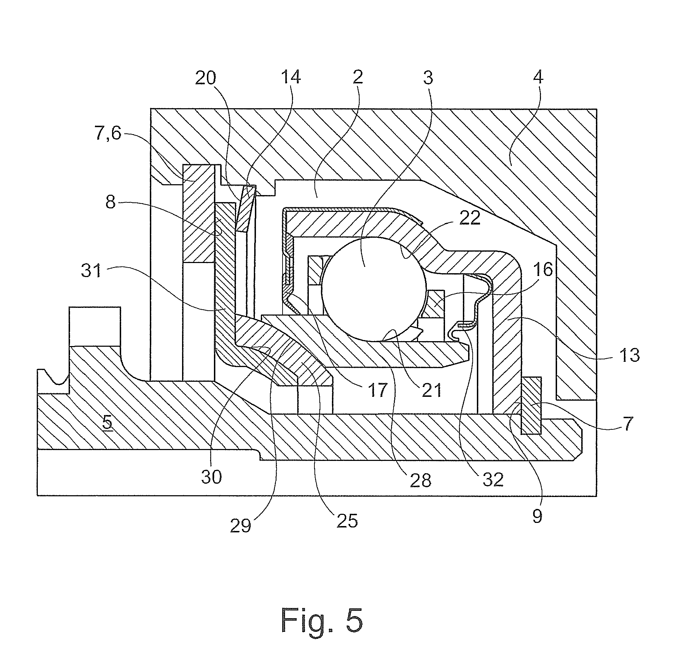

Figur 5 zeigt eine weitere Ausführungsform einer erfindungsgemäßen Ausrückeinrichtung mit einem Schrägkugellager aus einem inneren Lagerring 28, einem äußeren Lagerring 2 und aus Wälzkörpern 3, das in einem äußeren Bauteil 4 aufgenommen ist. Das äußere Bauteil 4 in Form eines Gehäuses umgibt das Schrägkugellager umfangsseitig und ist relativ zu einem nicht dargestellten Getriebe drehfest gelagert.

Der innere Lagerring 28 weist eine konkave Anlagefläche 29 auf. Der konkaven Anlagefläche 29 liegt eine konvexe Anlagefläche 30 gegenüber. Die Anlageflächen 29 und 30 sind durch eine Zwischenlage 25 voneinander getrennt oder liegen alternativ aneinander. Die Formen der Anlageflächen 29 und 30 korrespondieren so miteinander, dass gegenseitiges Verschwenken gegeneinander möglich ist und damit in der Ausrückeinrichtung zwischen dem äußeren Bauteil 4 und dem Schrägkugellager Winkelversatz ausgeglichen werden kann.

Die Anlagefläche 30 ist an einem Stützring 31 ausgebildet, der durch die axialen Federkräfte eines Federelements 14 axial zwischen dem Federelement 14 und einem Haltering 6 eingeklemmt ist. Der Haltering 6 ist lochscheibenförmig ausgebildet und greift in eine Nut 20 des äußeren Bauteils 4 und ist in dieser somit axial an dem äußeren Bauteil 4 abgestützt. Das Federelement 14 ist ebenfalls axial in dem äußeren Bauteil 4 abgestützt, so dass der Stützring 31 axial in die eine Richtung über den Haltering 6 und in die andere Richtung über das Federelement 14 axial an dem Gehäuse 4 abgestützt ist. Darüber hinaus sitzt der Stützring 31 drehfest in dem Gehäuse. Der innere Lagerring 28 ist dem Stützring 31 drehfest zugeordnet.

Der äußere Lagerring 2 ist an einem innen liegenden mit einer nicht dargestellten Kupplung drehenden hülsenförmigen inneren Bauteil 5 drehfest und axial abgestützt.

An beiden Lagerringen 28 und 2 sind Laufbahnen 21 und 22 für Wälzkörper 3 ausgebildet. Durch den Wälzkontakt der Wälzkörper 3, die sich an den Laufbahnen 21 und 22 abstützen, mit den Laufbahnen 21 und 22 sind die rotierenden Relativbewegungen des äußeren Lageringes 2 gegenüber dem inneren Lagerring 28 und damit gegenüber dem äußeren Bauteil 4 möglich. Die Wälzkörper 3 in Form von Kugeln sind zudem in einem Käfig 16 geführt. Dichtungen 17 und 32 dichten den zwischen den beiden Lagerringen 28 und 2 verbleibenden Spalt.

An dem äußeren Bauteil 4 greift ein nicht dargestellter Betätigungsorgan an, so dass das Ausrücklager durch Ziehen axial zum Ausrücken der Kupplung betätigt werden kann. Dieses Ausrückorgan ist beispielsweise ein gabelförmiger Hebel. Das linear bewegte Gehäuse (4) nimmt dabei den in ihm verankerten Haltering 6 mit, der seinerseits mit einer Stützfläche 8 flach an dem Stützring 31 axial anliegt. Die Betätigungskräfte werden von dem stehenden inneren Lagerring 28 auf den äußeren Lagerring 2 übertragen, der das innere Bauteil 5 axial mitnimmt und die Kupplung ausrückt.

Der Stützring 31 oder der äußere Lagerring können in radiale Richtungen beweglich mit Spiel zu dem jeweiligen Bauteil angeordnet sein.

Zur Verbindung des äußeren Lagerrings 2 mit dem innen liegenden drehbaren Bauteil 5 ist ein Sicherungsring oder ein ähnlich ausgebildetes mit dem inneren Bauteil 5 verankertes Halteelement 7 vorgesehen, das auch eine Schulter sein kann und das auch eine sich radial erstreckende Stützfläche 9 aufweist, an der ein Radialflansch 13 des äußeren Lagerrings 2 unmittelbar anliegt und axial gesichert ist. Der äußere Lagerring 2 kann mit einem Presssitz auf dem inneren Bauteil 2 sitzen und oder mittels Formschlusselemente gegen Verdrehen auf diesem gesichert sein.

### Bezugszeichenliste

- 1: innerer Lagerring
- 2: äußerer Lagerring
- 3: Wälzkörper
- 4: äußeres Bauteil
- 5: inneres Bauteil
- 6: Haltering
- 7: Halteelement
- 8: Stützfläche
- 9: Stützfläche
- 10: Stützring
- 11: Anlagefläche
- 12: Rand
- 13: Radialflansch
- 14: Federelement
- 15: Zwischenlage
- 16: Käfig
- 17: Dichtung
- 18: Stift
- 19: Flansch
- 20: Nut
- 21: Laufbahn
- 22: Laufbahn
- 23: Radialspalt
- 24: Dichtung
- 25: Zwischenlage
- 26: Achsversatz
- 27: Anlagefläche
- 28: innerer Lagerring
- 29: Anlagefläche
- 30: Anlagefläche
- 31: Stützring
- 32: Dichtung

## Patentansprüche

1. Ausrückeinrichtung mit einem durch Zugkraft betätigten Schrägkugellager, umfassend einen inneren Lagerring (1) und einen äußeren Lagerring (2) sowie zwischen den Lagerringen (1, 2) geführte Wälzkörper (3), wobei das Schrägkugellager radial beweglich in einem das Schrägkugellager außen umgebenden drehfesten äußeren Bauteil (4) axial abgestützt ist, **dadurch gekennzeichnet, dass** der innere Lagerring (1) an dem drehfesten äußeren Bauteil (4) beidseitig axial abgestützt ist und der äußere Lagerring (2) an einem von dem äußeren Lagerring (2) zumindest teilweise umgebenen inneren drehbaren Bauteil (5) axial abgestützt ist, wobei der innere Lagerring relativ zu dem äußeren Bauteil (4) begrenzt radial verschiebbar an dem äußeren Bauteil (4) abgestützt ist.

2. Ausrückeinrichtung nach Anspruch 1, **dadurch gekennzeichnet, dass** an dem außen liegenden Bauteil (4) ein Haltering (6) mit einer sich radial erstreckenden Stützfläche (8) axial fest ist, über den der innere Lagerring (1) axial in eine Axialrichtung an dem äußeren Bauteil (5) abgestützt ist, wobei der innere Lagerring (1) an der Stützfläche (8) radial beweglich anliegt.

3. Ausrückeinrichtung nach Anspruch 1, **dadurch gekennzeichnet, dass** dem äußeren Lagerring (2) eine konvex ausgebildete Anlagefläche (27) zugeordnet ist, welche mit einer konkav ausgebildeten Anlagefläche (11) korrespondiert, wobei die konkav ausgebildete Anlagefläche (11) axial fest dem inneren Bauteil (5) zugeordnet ist, und wobei die Anlageflächen (11, 27) gegeneinander axial vorgespannt und gegeneinander verschwenkbar sind.

4. Ausrückeinrichtung nach Anspruch 1, **dadurch gekennzeichnet,** der innere Lagerring (1) über einen zum inneren Lagerring (1) separaten Stützring (31) an dem äußeren Bauteil (4) axial abgestützt ist, wobei der Stützring (31) radial beweglich zu dem äußeren Bauteil (4) ist.

5. Ausrückeinrichtung nach Anspruch 4, **dadurch gekennzeichnet, dass** dem Stützring (31) eine konvex ausgebildete Anlagefläche (30) zugeordnet ist, welche mit einer konkav ausgebildeten Anlagefläche (29) korrespondiert, wobei die konkav ausgebildete Anlagefläche (29) dem inneren Lagerring (1) axial fest zugeordnet ist, und wobei die Anlageflächen (29, 30) gegeneinander axial vorgespannt und gegeneinander verschwenkbar sind.

6. Ausrückeinrichtung nach Anspruch 2 oder 4, **dadurch gekennzeichnet, dass** die Ausrückeinrichtung zwischen den Anlageflächen (11, 27, 29, 30) eine Beschichtung oder eine Zwischenlage (15, 25) aus einem Gleitmaterial aufweist.

7. Ausrückeinrichtung mit einem durch Zugkraft betätigten Schrägkugellager, umfassend einen inneren Lagerring (1) und einen äußeren Lagerring (2) sowie zwischen den Lagerringen (1, 2) geführte Wälzkörper (3), wobei das Schrägkugellager radial beweglich in einem das Schrägkugellager außen umgebenden drehfesten äußeren Bauteil (4) axial abgestützt ist, **dadurch gekennzeichnet, dass** der innere Lagerring (1) an dem drehfesten äußeren Bauteil (4) beidseitig axial abgestützt ist und der äußere Lagerring (2) an einem von dem äußeren Lagerring (2) zumindest teilweise umgebenen inneren drehbaren Bauteil (5) axial abgestützt ist, wobei einem der Lagerringe (1, 2) eine gekrümmt ausgebildete Anlagefläche (27, 29) zugeordnet ist, welche mit einer weiteren gekrümmt ausgebildeten Anlagefläche (11, 30) korrespondiert, und wobei die weitere gekrümmt ausgebildete Anlagefläche (11, 30) axial fest einem der Bauteile (4, 5) zugeordnet ist, und dabei die Anlageflächen (11, 27, 29, 30) gegeneinander verschwenkbar sind.

8. Ausrückeinrichtung nach Anspruch 7, **dadurch gekennzeichnet,** der innere Lagerring über einen Stützring (31) axial in eine Axialrichtung an einem Haltering (6) mit einer sich radial erstreckenden Stützfläche (8) axial abgestützt ist, wobei der Stützring (31) axial an dem Halterring (6) und der Haltering (6) axial an dem äußeren Bauteil (4) abgestützt ist und wobei der Stützring (31) radial beweglich axial an der Stützfläche (8) anliegt und wobei der Stützring (31) die weitere gekrümmte Anlagefläche (30) aufweist.

9. Ausrückeinrichtung nach Anspruch 8, **dadurch gekennzeichnet, dass** dem Stützring (31) eine konvex ausgebildete Anlagefläche (30) zugeordnet ist, welche mit einer konkav ausgebildeten Anlagefläche (29) korrespondiert, wobei die konkav ausgebildete Anlagefläche (29) dem inneren Lagerring (1) axial fest zugeordnet ist, und wobei die Anlageflächen (29, 30) gegeneinander verschwenkbar sind.

10. Ausrückeinrichtung nach Anspruch 7, **dadurch gekennzeichnet, dass** dem äußeren Lagerring (2) eine konvex ausgebildete Anlagefläche (27) zugeordnet ist, welche mit einer konkav ausgebildeten Anlagefläche (11) korrespondiert, wobei die konkav ausgebildete Anlagefläche (11) axial fest dem inneren Bauteil (5) zugeordnet ist, und wobei die Anlageflächen (11, 27) gegeneinander axial vorgespannt und gegeneinander verschwenkbar sind.

11. Ausrückeinrichtung nach einem der vorhergehenden Ansprüche 8, 9 oder 10, **dadurch gekennzeichnet, dass** die konvex und/oder konkav ausgebildete Anlagefläche (11, 27, 29, 30) eine Beschichtung oder eine Zwischenlage (15, 25) aus einem Gleitmaterial aufweist.

## Claims

1. Disengaging unit with an angular ball bearing actuated by tensile force, comprising an inner bearing ring (1) and an outer bearing ring (2) and also rolling bodies (3) guided between the bearing rings (1, 2), the angular ball bearing being axially supported radially movably in a rotationally fixed outer component (4) surrounding the angular ball bearing on the outside, **characterized in that** the inner bearing ring (1) is axially supported on both sides on the rotationally fixed outer component (4), and the outer bearing ring (2) is axially supported on an inner rotatable component (5) surrounded at least partially by the outer bearing ring (2), the inner bearing ring being supported on the outer component (4) so as to be radially displaceable to a limited extent in relation to the outer component (4).

2. Disengaging unit according to Claim 1, **characterized in that** a holding ring (6) with a radially extending supporting face (8) is fixed axially on the outer component (4), via which holding ring the inner bearing ring (1) is axially supported on the outer component (4) in an axial direction, the inner bearing ring (1) bearing radially movably against the supporting face (8).

3. Disengaging unit according to Claim 1, **characterized in that** the outer bearing ring (2) is assigned a convexly formed bearing face (27) which matches with a concavely formed bearing face (11), the concavely formed bearing face (11) being assigned axially fixedly to the inner component (5), and the bearing faces (11, 27) being axially prestressed with respect to one another and pivotable with respect to one another.

4. Disengaging unit according to Claim 1, **characterized in that** the inner bearing ring (1) is axially supported on the outer component (4) via a supporting ring (31) separate from the inner bearing ring (1), the supporting ring (31) being radially movable in relation to the outer component (4).

5. Disengaging unit according to Claim 4, **characterized in that** the supporting ring (31) is assigned a convexly formed bearing face (30) which matches with a concavely formed bearing face (29), the concavely formed bearing face (29) being assigned axially fixedly to the inner bearing ring (1), and the bearing faces (29, 30) being axially prestressed with respect to one another and pivotable with respect to one another.

6. Disengaging unit according to Claim 2 or 4, **characterized in that** the disengaging unit has between the bearing faces (11, 27, 29, 30) a coating or an intermediate layer (15, 25) composed of a sliding material.

7. Disengaging unit with an angular ball bearing actuated by tensile force, comprising an inner bearing ring (1) and an outer bearing ring (2) and also rolling bodies (3) guided between the bearing rings (1, 2), the angular ball bearing being axially supported radially movably in a rotationally fixed outer component (4) surrounding the angular ball bearing on the outside, **characterized in that** the inner bearing ring (1) is axially supported on both sides on the rotationally fixed outer component (4), and the outer bearing ring (2) is axially supported on an inner rotatable component (5) surrounded at least partially by the outer bearing ring (2), one of the bearing rings (1, 2) being assigned a curvedly formed bearing face (27, 29) which matches with a further curvedly formed bearing face (11, 30), and the further curvedly formed bearing face (11, 30) being assigned axially fixedly to one of the components (4, 5), and in this case the bearing faces (11, 27, 29, 30) being pivotable with respect to one another.

8. Disengaging unit according to Claim 7, **characterized in that** the inner bearing ring is axially supported via a supporting ring (31) in an axial direction on a holding ring (6) with a radially extending supporting face (8), the supporting ring (31) being axially supported on the holding ring (6) and the holding ring (6) being axially supported on the outer component (4), and the supporting ring (31) axially bearing radially movably against the supporting face (8), and the supporting ring (31) having the further curved bearing face (30).

9. Disengaging unit according to Claim 8, **characterized in that** the supporting ring (31) is assigned a convexly formed bearing face (30) which matches with a concavely formed bearing face (29), the concavely formed bearing face (29) being assigned axially fixedly to the inner bearing ring (1), and the bearing faces (29, 30) being pivotable with respect to one another.

10. Disengaging unit according to Claim 7, **characterized in that** the outer bearing ring (2) is assigned a convexly formed bearing face (27) which matches with a concavely formed bearing face (11), the concavely formed bearing face (11) being assigned axially fixedly to the inner component (5), and the bearing faces (11, 27) being axially prestressed with respect to one another and pivotable with respect to one another.

11. Disengaging unit according to one of the preceding Claims 8, 9 or 10, **characterized in that** the convexly and/or concavely formed bearing face (11, 27, 29, 30) has a coating or an intermediate layer (15, 25) composed of a sliding material.

## Revendications

1. Dispositif de débrayage comprenant un roulement à billes à contact oblique actionné par une force de traction, comprenant une bague de roulement interne (1) et une bague de roulement externe (2) ainsi que des corps de roulement (3) guidés entre les bagues de roulement (1, 2), le roulement à billes à contact oblique étant supporté axialement de manière déplaçable radialement dans un composant externe (4) solidaire en rotation entourant à l'extérieur le roulement à billes à contact oblique, **caractérisé en ce que** la bague de roulement interne (1) est supportée axialement des deux côtés sur le composant externe (4) solidaire en rotation et la bague de roulement externe (2) est supportée axialement sur un composant (5) rotatif interne au moins en partie entouré par la bague de roulement externe (2), la bague de roulement interne étant supportée sur le composant externe (4) de manière déplaçable radialement par rapport au composant externe (4) dans une mesure limitée.

2. Dispositif de débrayage selon la revendication 1, **caractérisé en ce qu'**une bague de retenue (6) est fixée axialement sur le composant (4) situé à l'extérieur par une surface de support (8) s'étendant radialement, par le biais de laquelle bague de retenue la bague de roulement interne (1) est supportée axialement dans une direction axiale sur le composant externe (4), la bague de roulement interne (1) s'appliquant de manière déplaçable radialement contre la surface de support (8).

3. Dispositif de débrayage selon la revendication 1, **caractérisé en ce qu'**une surface d'appui (27) réalisée sous forme convexe est associée à la bague de roulement externe (2), laquelle surface d'appui correspond à une surface d'appui (11) réalisée sous forme concave, la surface d'appui (11) réalisée sous forme concave étant associée de manière fixe axialement au composant interne (5), et les surfaces d'appui (11, 27) étant précontraintes axialement l'une contre l'autre et pouvant pivoter l'une par rapport à l'autre.

4. Dispositif de débrayage selon la revendication 1, **caractérisé en ce que** la bague de roulement interne (1) est supportée axialement sur le composant externe (4) par le biais d'une bague de support (31) séparée par rapport à la bague de roulement interne (1), la bague de support (31) étant radialement déplaçable par rapport au composant externe (4).

5. Dispositif de débrayage selon la revendication 4, **caractérisé en ce qu'**une surface d'appui (30) réalisée sous forme convexe est associée à la bague de support (31), laquelle surface d'appui correspond à une surface d'appui (29) réalisée sous forme concave, la surface d'appui (29) réalisée sous forme concave étant associée de manière fixe axialement à la bague de roulement interne (1), et les surfaces d'appui (29, 30) étant précontraintes axialement l'une contre l'autre et pouvant pivoter l'une par rapport à l'autre.

6. Dispositif de débrayage selon la revendication 2 ou 4, **caractérisé en ce que** le dispositif de débrayage présente, entre les surfaces d'appui (11, 27, 29, 30), un revêtement ou une couche intermédiaire (15, 25) en un matériau de glissement.

7. Dispositif de débrayage comprenant un roulement à billes à contact oblique actionné par une force de traction, comprenant une bague de roulement interne (1) et une bague de roulement externe (2) ainsi que des corps de roulement (3) guidés entre les bagues de roulement (1, 2), le roulement à billes à contact oblique étant supporté axialement de manière déplaçable radialement dans un composant externe (4) solidaire en rotation entourant à l'extérieur le roulement à billes à contact oblique, **caractérisé en ce que** la bague de roulement interne (1) est supportée axialement des deux côtés sur le composant externe (4) solidaire en rotation et la bague de roulement externe (2) est supportée axialement sur un composant (5) rotatif interne au moins en partie entouré par la bague de roulement externe (2), une surface d'appui (27, 29) réalisée sous forme courbée étant associée à l'une des bagues de roulement (1, 2), laquelle surface d'appui correspond à une surface d'appui supplémentaire (11, 30) réalisée sous forme courbée, et la surface d'appui supplémentaire (11, 30) réalisée sous forme courbée étant associée axialement fixement à l'un des composants (4, 5) et les surfaces d'appui (11, 27, 29, 30) pouvant en l'occurrence pivoter les unes par rapport aux autres.

8. Dispositif de débrayage de roulement selon la revendication 7, **caractérisé en ce que** la bague de roulement interne est supportée axialement par le biais d'une bague de support (31) axialement dans une direction axiale contre une bague de retenue (6) avec une surface de support (8) s'étendant radialement, la bague de support (31) étant supportée axialement au niveau de la bague de retenue (6) et la bague de retenue (6) étant supportée axialement au niveau du composant extérieur (4) et la bague de support (31) s'appliquant radialement de manière déplaçable axialement contre la surface de support (8) et la bague de support (31) présentant la surface d'appui supplémentaire courbée (30).

9. Dispositif de débrayage selon la revendication 8, **caractérisé en ce qu'**une surface d'appui (30) réalisée sous forme convexe est associée à la bague de support (31), laquelle surface d'appui correspond à une surface d'appui (29) réalisée sous forme concave, la surface d'appui (29) réalisée sous forme concave étant associée fixement axialement à la bague de roulement interne (1), et les surfaces d'appui (29, 30) pouvant pivoter l'une par rapport à l'autre.

10. Dispositif de débrayage selon la revendication 7, **caractérisé en ce qu'**une surface d'appui (27) réalisée sous forme convexe est associée à la bague de roulement externe (2), laquelle surface d'appui correspond à une surface d'appui (11) réalisée sous forme concave, la surface d'appui (11) réalisée sous forme concave étant associée axialement fixement au composant interne (5) et les surfaces d'appui (11, 27) étant précontraintes axialement l'une contre l'autre et pouvant pivoter l'une par rapport à l'autre.

11. Dispositif de débrayage selon l'une quelconque des revendications 8, 9 ou 10, **caractérisé en ce que** la surface d'appui réalisée sous forme convexe et/ou concave (11, 27, 29, 30) présente un revêtement ou une couche intermédiaire (15, 25) en un matériau de glissement.
